# EUROPEAN PATENT APPLICATION

(11) **EP 4 178 007 A1**
(43) Date of publication of application: **10.05.2023**
(21) Application number: 21951138.3
(22) Date of filing: 13.08.2021
(51) Int. Cl.: H01M 10/613

(54) **BATTERY CELL, BATTERY, ELECTRICAL DEVICE, AND METHOD AND DEVICE FOR MANUFACTURING BATTERY CELL**

(71) Applicant: Contemporary Amperex Technology Co., Limited, Ningde, Fujian 352100 (CN)
(72) Inventor: ZHOU, Wenlin, Ningde Fujian 352000 (CN); XU, Liangfan, Ningde Fujian 352000 (CN); CHEN, Wenwei, Ningde Fujian 352000 (CN); LI, Xing, Ningde Fujian 352000 (CN); LI, Quankun, Ningde Fujian 352000 (CN)
(74) Representative: Rowlands, Stuart Michael
(86) International application number: PCT/CN2021/112495
(87) International publication number: WO 2023/015558

(57) **Abstract**

The embodiments of the present application provide a battery cell, a battery, a power consuming apparatus, and a method and apparatus for manufacturing the battery cell, relating to the technical field of batteries. The battery cell includes a housing, an electrode assembly, an end cap, an insulator and a thermally conductive member. The housing is provided with an opening. The electrode assembly is configured to be accommodated in the housing. The end cap is configured to cover the opening. The insulator is located on the side of the end cap facing the electrode assembly, and the insulator is configured to isolate the end cap from the electrode assembly. The thermally conductive member is embedded in the insulator, and the thermally conductive member is configured to be attached to the end cap. Heat generated by the electrode assembly may be transferred to the end cap through the thermally conductive member, and the arrangement of the thermally conductive member improves the heat transfer efficiency between the electrode assembly and the end cap, so that the heat generated by the electrode assembly may be more easily transferred to the end cap through the thermally conductive member, thereby effectively improving the heat dissipation performance of the battery cell and prolonging the service life of the battery cell.

## Description

### Technical Field

The present application relates to the technical field of batteries, and in particular, relates to a battery cell, a battery, a power consuming apparatus, and a method and apparatus for manufacturing the battery cell.

### Background Art

Batteries are widely used in electronic devices, such as mobile phones, notebook computers, electric mopeds, electric vehicles, electric aircraft, electric ships, electric toy vehicles, electric toy ships, electric toy aircrafts, and electric tools.

A battery cell generally generates electric energy by means of metal ions moving between a positive electrode plate and a negative electrode plate. Heat is generated in the battery cell in a charge/discharge process. If the heat in the battery cell cannot be dissipated in time, the service life of the battery cell will be directly affected.

Therefore, how to improve the service life of a battery cell is an urgent problem to be solved in the battery technology.

### Summary of the Invention

The embodiments of the present application provide a battery cell, a battery, a power consuming apparatus, and a method and apparatus for manufacturing the battery cell, which can effectively improve the service life of the battery cell.

In a first aspect, an embodiment of the present application provides a battery cell, including: a housing provided with an opening; an electrode assembly configured to be accommodated in the housing; an end cap configured to cover the opening; an insulator located on the side of the end cap facing the electrode assembly, the insulator being configured to isolate the end cap from the electrode assembly; and a thermally conductive member embedded in the insulator, the thermally conductive member being configured to be attached to the end cap.

In the above technical solution, the insulator is internally embedded with the thermally conductive member, the thermally conductive member is attached to the end cap, heat generated by the electrode assembly may be efficiently transferred to the end cap through the thermally conductive member, and the arrangement of the thermally conductive member improves the heat transfer efficiency between the electrode assembly and the end cap, so that the heat generated by the electrode assembly may be more easily transferred to the end cap through the thermally conductive member, thereby effectively improving the heat dissipation performance of the battery cell and prolonging the service life of the battery cell.

In some embodiments, the insulator is provided with an accommodating groove with a groove opening facing the end cap, and the thermally conductive member is at least partially accommodated in the accommodating groove; and the thermally conductive member includes a first attachment surface and a second attachment surface which are arranged opposite each other in a thickness direction of the end cap, where the first attachment surface is configured to be attached to the end cap, and the second attachment surface is configured to be attached to a bottom face of the accommodating groove.

In the above technical solution, the thermally conductive member is at least partially accommodated in the accommodating groove of the insulator, and the accommodating groove has a limiting effect on the thermally conductive member, so that the thermally conductive member is embedded in the insulator. The first attachment surface of the thermally conductive member is attached to the end cap, so that the thermally conductive member is attached to the end cap, and the second attachment surface of the thermally conductive member is attached to the bottom face of the accommodating groove. For one thing, the distance between the thermally conductive member and the electrode assembly may be shortened, and a heat dissipation distance between the thermally conductive member and the electrode assembly is reduced. For another, the contact area between the thermally conductive member and the insulator may be increased, and the heat transfer efficiency between the insulator and the thermally conductive member is improved, so that the heat on the insulator may be quickly transferred to the thermally conductive member, further improving the heat dissipation performance of the battery cell.

In some embodiments, the insulator includes an insulating portion located at the bottom of the accommodating groove, and the insulating portion is configured to separate the electrode assembly from the thermally conductive member; and the depth of the accommodating groove is greater than the thickness of the insulating portion.

In the above technical solution, the depth of the accommodating groove is greater than the thickness of the insulating portion separating the electrode assembly from the thermally conductive member, the insulating portion is relatively thin, and the heat generated by the electrode assembly is more easily transferred to the thermally conductive member through the insulating portion, so as to take away the heat inside the battery cell in time.

In some embodiments, the insulator is provided with a third attachment surface attached to the end cap, the accommodating groove is recessed from the third attachment surface to the direction away from the end cap, and the third attachment surface is flush with the first attachment surface.

In the above technical solution, the third attachment surface of the insulator is flush with the first attachment surface of the thermally conductive member, so that the first attachment surface and the third attachment surface both can be attached to the end cap, which is convenient for the heat transfer from the thermally conductive member and the insulator to the end cap and for heat dissipation inside the battery cell.

In some embodiments, the insulator is provided with a limiting member, and the limiting member is configured to limit the thermally conductive member from the insulator.

In the above technical solution, the limiting member on the insulator has a limiting effect on the thermally conductive member, so as to limit the thermally conductive member from the insulator, and to facilitate the assembly of the battery cell.

In some embodiments, the insulator is provided with an accommodating groove with a groove opening facing the end cap, and the thermally conductive member is at least partially accommodated in the accommodating groove; and the limiting member is configured to limit the thermally conductive member from a bottom face of the accommodating groove.

In the above technical solution, the limiting member functions to limit the thermally conductive member from the bottom face of the accommodating groove, so that the thermally conductive member is always in contact with the bottom face of the accommodating groove, thereby increasing the heat transfer efficiency between the insulator and the thermally conductive member, and enabling the heat on the insulator to be quickly transferred to the thermally conductive member.

In some embodiments, in a thickness direction of the end cap, a limiting gap is formed between at least part of the limiting member and the bottom face, and the limiting gap is configured to accommodate part of the thermally conductive member, so as to limit the thermally conductive member from the bottom face.

In the above technical solution, at least part of the thermally conductive member is accommodated in the limiting gap formed between the limiting member and the bottom face, so as to limit the thermally conductive member, thereby achieving the purpose of limiting the thermally conductive member from the bottom face of the accommodating groove, and realizing a simple limiting structure.

In some embodiments, the thermally conductive member is provided with a through hole, the through hole is configured to accommodate the limiting member, and a limiting protrusion is formed on a hole wall of the through hole; and the limiting member includes a connecting portion and a limiting portion connected to each other, where the connecting portion is connected to the bottom face, the limiting gap is formed between the limiting portion and the bottom face, and the limiting gap is configured to accommodate the limiting protrusion.

In the above technical solution, the limiting protrusion on the hole wall of the through hole of the thermally conductive member is accommodated in the limiting gap formed between the limiting portion and the bottom face of the accommodating groove, and the insulator is snap-fitted to the thermally conductive member through the limiting member, facilitating the disassembly and assembly of the thermally conductive member and the insulator.

In some embodiments, the limiting member protrudes from the bottom face, a fourth attachment surface is formed at the end of the limiting member away from the bottom face, and the fourth attachment surface is configured to be attached to the end cap.

In the above technical solution, the fourth attachment surface of the limiting member is attached to the end cap, facilitating heat transfer from the insulator to the end cap.

In some embodiments, the end cap is configured to be attached to a thermal management component, and the thermal management component is configured to manage the temperature of the battery cell.

In the above technical solution, the end cap is configured to be attached to the thermal management component, and the battery cell may transfer heat to the thermal management component through the end cap, so as to adjust the temperature of the battery cell through the thermal management component. Since the insulator is internally embedded with the thermally conductive member, which can effectively improve the thermal management efficiency of the thermal management component to the battery cell, so that the battery cell is in a reasonable operating temperature.

In some embodiments, the end cap is provided with an attachment portion attached to the thermal management component, and the thermally conductive member is configured to be attached to the attachment portion.

In the above technical solution, the attachment portion of the end cap is configured to be attached to the thermal management component and the thermally conductive member, which can shorten a heat transfer path between the thermal management component and the thermally conductive member, and improves the heat impact efficiency of the thermal management component to the battery cell.

In some embodiments, in a thickness direction of the end cap, a projection of the thermal management component at least partially overlaps with that of the thermally conductive member.

In the above technical solution, the projection of the thermal management component in the thickness direction of the end cap at least partially overlaps with that of the thermally conductive member in the thickness direction of the end cap, which can effectively shorten the heat transfer path between the thermal management component and the thermally conductive member, and improves the heat impact efficiency of the thermal management component to the battery cell.

In some embodiments, the thermally conductive member is made of metal.

In the above technical solution, the thermally conductive member is made of metal, so that the thermally conductive member has good thermally conductive capability.

In a second aspect, an embodiment of the present application provides a battery, including: the battery cell provided by any one of the embodiments in the first aspect; and a case configured to accommodate the battery cell.

In some embodiments, the battery further includes a thermal management component, the thermal management component is configured to be attached to the end cap, and the thermal management component is configured to manage the temperature of the battery cell.

In a third aspect, an embodiment of the present application provides a power consuming apparatus which includes the battery provided by any one of the embodiments in the second aspect.

In a fourth aspect, an embodiment of the present application provides a method for manufacturing a battery cell. The method includes: providing a housing provided with an opening; providing an electrode assembly; providing an end cap, an insulator and a thermally conductive member, where the insulator is located on one side of the end cap, the thermally conductive member is embedded in the insulator, and the thermally conductive member is configured to be attached to the end cap; accommodating the electrode assembly in the housing; and covering the opening with the end cap, such that the insulator is located on the side of the end cap facing the electrode assembly.

In a fifth aspect, an embodiment of the present application further provides an apparatus for manufacturing a battery cell, the apparatus including: a first provision device configured to provide a housing provided with an opening; a second provision device configured to provide an electrode assembly; a third provision device configured to provide an end cap, an insulator and a thermally conductive member, where the insulator is located on one side of the end cap, the thermally conductive member is embedded in the insulator, and the thermally conductive member is configured to be attached to the end cap; and an assembly device configured to accommodate the electrode assembly in the housing, and the assembly device being further configured to cover the opening with the end cap, such that the insulator is located on the side of the end cap facing the electrode assembly.

### Brief Description of the Drawings

In order to more clearly explain the technical solutions of the embodiments of the present application, the drawings being used in the embodiments will be described briefly below. It should be understood that the following drawings illustrate only some embodiments of the present application and are therefore not to be considered as a limitation on the scope thereof. For those of ordinary skill in the art, other relevant drawings can also be obtained from these drawings without any creative effort.
FIG. 1 is a schematic structural diagram of a vehicle according to some embodiments of the present application;
FIG. 2 is a schematic structural diagram of a battery according to some embodiments of the present application;
FIG. 3 is an exploded view of a battery cell according to some embodiments of the present application;
FIG. 4 is a schematic structural diagram of an end cap assembly shown in FIG. 3;
FIG. 5 is a partial enlarged view of part A in the end cap assembly shown in FIG. 4;
FIG. 6 is a partial exploded view of the end cap assembly shown in FIG. 4;
FIG. 7 is a position relationship diagram of the end cap assembly and a thermal management component;
FIG. 8 is a flow chart of a method for manufacturing the battery cell according to some embodiments of the present application; and
FIG. 9 is a schematic block diagram of an apparatus for manufacturing the battery cell according to some embodiments of the present application.

List of reference signs: 10 - Case; 11 - First portion; 12 - Second portion; 20 - Battery cell; 21 - Housing; 22 - Electrode assembly; 221 - Positive tab; 222 - Negative tab; 23 - End cap; 231 - Positive electrode terminal; 232 - Negative electrode terminal; 233 - Main portion; 2331 - Attachment portion; 234 - Bump; 235 - Recess; 24 - Insulator; 241 - Accommodating groove; 2411 - Bottom face; 2412 - Groove side face; 242 - Insulating portion; 243 - Third attachment surface; 244 - Limiting member; 2441 - Connecting portion; 2442 - Limiting portion; 2443 - Fourth attachment surface; 245 - Limiting gap; 25 - Thermally conductive member; 251 - First attachment surface; 252 - Second attachment surface; 253 - Through hole; 2531 - Limiting protrusion; 30 - Thermal management component; 31 - Avoidance hole; 100 - Battery; 200 - Controller; 300 - Motor; 1000 - Vehicle; 2000 - Manufacturing apparatus; 2100 - First provision device; 2200 - Second provision device; 2300 - Third provision device; 2400 - Assembly device; X - Length direction; Y - Width direction; Z - Thickness direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising/including" and "having" and any variations thereof in the description and the claims of the present application as well as the brief description of the drawings described above are intended to cover non-exclusive inclusion. The terms "first", "second", etc. in the description and the claims of the present application as well as the foregoing drawings are used to distinguish between different objects, rather than describing a specific order or a primary-secondary relationship.

In the present application, "embodiment" mentioned means that the specific features, structures or characteristics described with reference to the embodiments may be included in at least one embodiment of the present application. The phrase at various locations in the specification does not necessarily refer to the same embodiment, or an independent or alternative embodiment exclusive of another embodiment.

In the description of the present application, it should be noted that, the terms "install", "connected", "connect", or "attach" should be interpreted in a broad sense unless explicitly defined and limited otherwise. For example, the terms may be a fixed connection, a detachable connection, or an integral connection; or may be a direct connection, an indirect connection by means of an intermediate medium, or internal communication between two elements. For those of ordinary skills in the art, the specific meaning of the foregoing terms in the present application may be understood according to specific circumstances.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the drawings, as well as the dimensions, such as overall thickness, length and width, of an integrated device are illustrative only and should not be construed to limit the present application in any way.

"A plurality of' appearing in the present application means two or more (including two).

In the present application, a battery cell may include a lithium ion secondary battery, a lithium ion primary battery, a lithium-sulfur battery, a sodium/lithium ion battery, a sodium ion battery or a magnesium ion battery, and the like, which is not limited in the embodiments of the present application. The battery cell may be cylindrical, flat, cuboid or in another shape, which is not limited in the embodiments of the present application. The battery cell is generally classified into three types according to a packaging approach: a cylindrical battery cell, a prismatic battery cell, and a pouch battery cell, which is also not limited in the embodiments of the present application.

A battery mentioned in the embodiments of the present application refers to a single physical module including one or more battery cells to provide a higher voltage and capacity. For example, the battery mentioned in the present application may include a battery module, a battery pack, or the like. The battery generally includes a case for packaging one or more battery cells. The case can prevent liquid or other foreign matters from affecting the charging or discharging of the battery cell.

The battery cell includes an electrode assembly and an electrolyte, where the electrode assembly is composed of a positive electrode plate, a negative electrode plate and a separator. The battery cell operates mainly by relying on movement of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. A lithium ion battery is taken as an example, the positive electrode current collector may be made of aluminum, and a positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and a negative electrode active material may be carbon, silicon, or the like. In order to ensure that no fusing occurs when a large current passes, a plurality of positive tabs are provided and are stacked together, and a plurality of negative tabs are provided and are stacked together. The separator may be made from polypropylene (PP), polyethylene (PE), or the like. In addition, the electrode assembly may be of a winding structure or a laminated structure, which is not limited in the embodiments of the present application.

The inventors have noticed that during a charge/discharge cycle of a battery cell, heat is generated inside the battery cell. If the heat in the battery cell cannot be dissipated in time, the service life of the battery cell will be affected.

The inventors have found through researches that in a battery cell, in order to realize insulation between an end cap and an electrode assembly, an insulator needs to be arranged between the end cap and the electrode assembly to insulate the end cap from the electrode assembly. The end cap is insulated from the electrode assembly through the insulator, but the heat generated by the electrode assembly is not easily transferred to the end cap through the insulator due to a poor thermally conductive capability of the insulator, as a result, the heat inside the battery cell is difficult to dissipate, and as the internal heat of the battery cell accumulates, the internal temperature of the battery cell increases gradually, which affects the performance of the battery cell and even causes the risk of explosion, affecting the service life of the battery cell.

In view of this, an embodiment of the present application provides a battery cell. A thermally conductive member is embedded in the insulator, and the thermally conductive member is attached to the end cap, so that the heat generated by the electrode assembly of the battery cell can be transferred to the end cap through the thermally conductive member.

In such a battery cell, the arrangement of the thermally conductive member improves the heat transfer efficiency between the electrode assembly and the end cap, so that the heat generated by the electrode assembly can be more easily transferred to the end cap through the thermally conductive member, thereby effectively improving the heat dissipation performance of the battery cell and prolonging the service life of the battery cell.

The battery cell provided by the embodiment of the present application is applicable to a battery and a power consuming apparatus using the battery cell.

The power consuming apparatus may be a vehicle, a mobile phone, a portable device, a notebook computer, a ship, a spacecraft, an electric toy, an electric tool, and the like. The vehicle may be a fuel vehicle, a gas vehicle or a new-energy vehicle. The new-energy vehicle may be a battery electric vehicle, a hybrid vehicle, an extended-range vehicle, or the like. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming apparatus mentioned above is not specially limited in the embodiments of the present application.

For ease of description, a case in which the power consuming apparatus refers to a vehicle is taken as an example to be described in the following embodiments.

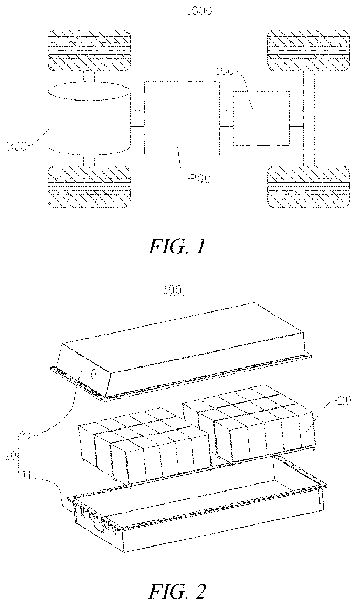

Referring to FIG. 1, FIG. 1 is a schematic structural diagram of a vehicle 1000 according to some embodiments of the present application, where a battery 100 is provided inside the vehicle 1000, and the battery 100 may be arranged at a bottom, head, or tail of the vehicle 1000. The battery 100 may be configured to supply power to the vehicle 1000. For example, the battery 100 may serve as a power source for operating the vehicle 1000.

The vehicle 1000 may further include a controller 200 and a motor 300, and the controller 200 is configured to control the battery 100 to supply power to the motor 300, for example, to satisfy the working power requirements during the starting, navigation and traveling of the vehicle 1000.

In some embodiments, the battery 100 can not only serve as a power source for operating the vehicle 1000, but also serve as a power source for driving the vehicle 1000, in place of or partially in place of fuel or natural gas, to provide driving power for the vehicle 1000.

Referring to FIG. 2, FIG. 2 is a schematic structural diagram of a battery 100 according to some embodiments of the present application, where the battery 100 includes a case 10 and a battery cell 20, and the case 10 is configured to accommodate the battery cell 20.

The case 10 is configured to provide an accommodation space for the battery cell 20, and the case 10 may have various structures. In some embodiments, the case 10 may include a first portion 11 and a second portion 12. The first portion 11 and the second portion 12 are fitted to each other in a covered manner to define the accommodation space for accommodating the battery cell 20.

The first portion 11 and the second portion 12 may be of various shapes such as a cuboid and a cylinder. The first portion 11 may be of a hollow structure with an open side, the second portion 12 may also be of a hollow structure with an open side, and the open side of the second portion 12 covers the open side of the first portion 11, such that the case 10 having the accommodation space is formed. Alternatively, the first portion 11 is of a hollow structure with an open side, the second portion 12 is of a plate-shaped structure, and the second portion 12 covers the open side of the first portion 11, such that the case 10 having the accommodation space is formed.

The first portion 11 and the second portion 12 can be sealed by a sealing element, and the sealing element may be a sealing ring, a sealant, or the like.

In the battery 100, one or more battery cells 20 may be provided. If a plurality of battery cells 20 are provided, the plurality of battery cells 20 may be connected in series, in parallel, or in series and parallel. A series-parallel connection refers that some of the plurality of battery cells 20 are connected in series and the rest of the plurality of battery cells are connected in parallel. A plurality of battery cells 20 may be first in series connection or parallel connection or series-parallel connection to form a battery module, and a plurality of battery modules are in series connection or parallel connection or series-parallel connection to form a unit and are accommodated in the case 10. It is also possible that all the battery cells 20 are directly connected in series or in parallel or in series and parallel, and then the whole body composed of all the battery cells 20 is accommodated in the case 10.

In some embodiments, the battery 100 may further include busbar components, and the plurality of battery cells 20 can be electrically connected to one another through the busbar component, so that the plurality of battery cells 20 are connected in series, in parallel, or in series and parallel.

The busbar component may be a metal conductor such as a copper conductor, an iron conductor, an aluminum conductor, a stainless steel conductor, and an aluminum alloy conductor.

In some embodiments, the battery 100 may further include a thermal management component 30 (not shown in FIG. 2), the thermal management component 30 being configured to manage the temperature of the battery cell 20.

The thermal management component 30 is a component configured to manage the temperature of the battery cell 20, and managing the temperature of the battery cell 20 refers to heating or cooling the battery cell 20. That is to say, the thermal management component 30 may be a heating component configured to heat the battery cell 20, and may also be a cooling component configured to cool the battery cell 20.

The thermal management component 30 may be a component configured to accommodate a fluid to regulate the temperature of the battery cell 20, and the fluid herein may be a liquid or a gas, for example, water, a mixed solution of water and ethylene glycol, or air, etc.

The thermal management component 30 can manage the temperature of the battery cell 20, so that the battery cell 20 is controlled to be within a reasonable operating temperature, thereby ensuring the performance of the battery cell 20 and prolonging the service life of the battery cell 20.

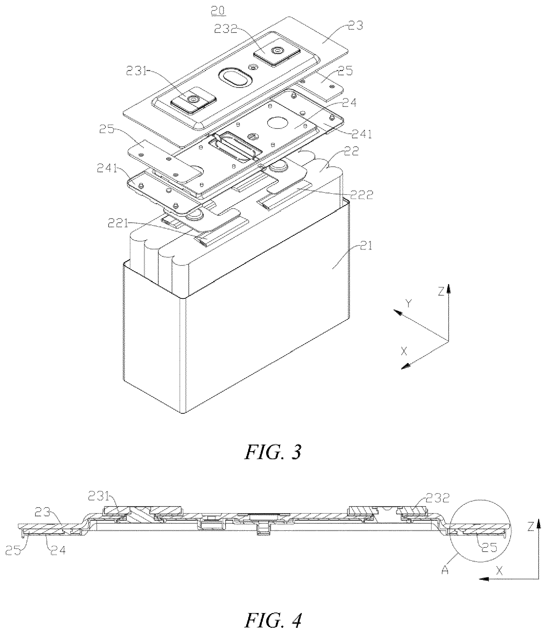

Referring to FIG. 3, FIG. 3 is an exploded view of a battery cell 20 according to some embodiments of the present application, the battery cell 20 including a housing 21, an electrode assembly 22 and an end cap assembly, where the end cap assembly includes an end cap 23 and an insulator 24.

The housing 21 is configured to accommodate components of the electrode assembly 22, and may have a hollow structure with an end forming an opening. The housing 21 may have various shapes such as cylinder and cuboid. The shape of the housing 21 may be determined according to the shape of the electrode assembly 22. If the electrode assembly 22 is of a cylindrical structure, a cylindrical housing 21 may be used; and if the electrode assembly 22 is of a cuboid structure, a cuboid housing 21 may be used. The housing 21 may be made of various materials, such as copper, iron, aluminum, steel, and aluminum alloy.

One or more electrode assemblies 22 may be provided in the housing 21. For example, as shown in FIG. 3, a plurality of electrode assemblies 22 are provided, and the plurality of electrode assemblies 22 are arranged in a width direction Y of the end cap 23 in a stacked manner.

The electrode assembly 22 is a component, where an electrochemical reaction occurs, in the battery cell 20. The electrode assembly 22 may include a positive electrode plate, a negative electrode plate and a separator. The electrode assembly 22 may be of a winding structure formed by winding the positive electrode plate, the separator and the negative electrode plate. The electrode assembly 22 may also be of a laminated structure formed by laminating the positive electrode plate, the separator and the negative electrode plate.

The positive electrode plate may include a positive electrode current collector and positive electrode active material layers coated on two opposite sides of the positive electrode current collector. The negative electrode plate may include a negative electrode current collector and negative electrode active material layers coated on two opposite sides of the negative electrode current collector. The electrode assembly 22 has a positive tab 221 and a negative tab 222, where the positive tab 221 may be an area of the positive electrode plate that is not coated with the positive electrode active material layer, and the negative tab 222 may be an area of the negative electrode plate that is not coated with the negative electrode active material layer.

The end cap 23 is a component that covers an opening of the housing 21 so as to isolate an internal environment of the battery cell 20 from an external environment. The end cap 23 covers the opening of the housing 21, and the end cap 23 and the housing 21 together define a sealing space for accommodating the electrode assembly 22, the electrolyte and other components. The shape of the end cap 23 may match the shape of the housing 21. For example, the housing 21 is of a cuboid structure, and the end cap 23 is of a rectangular plate structure matching the housing 21. For another example, the housing 21 is of a cylindrical structure, and the end cap 23 is of a circular plate structure matching the housing 21. The end cap 23 may also be made of various materials, such as copper, iron, aluminum, steel, and aluminum alloy. The end cap 23 may be of the same material as or a different material from the housing 21.

The end cap 23 may be provided with an electrode terminal, the electrode terminal being configured to be electrically connected to the electrode assembly 22, so as to output electric energy of the battery cell 20. The electrode terminal may include a positive electrode terminal 231 and a negative electrode terminal 232, where the positive electrode terminal 231 is configured to be electrically connected to the positive tab 221, and the negative electrode terminal 232 is configured to be electrically connected to the negative tab 222. Illustratively, the positive electrode terminal 231 may be electrically connected to the positive tab 221 by means of a current collecting member, and the negative electrode terminal 232 may be electrically connected to the negative tab 222 by means of another current collecting member.

The insulator 24 is a component isolating the end cap 23 from the electrode assembly 22, and the insulator 24 is used to realize insulation between the end cap 23 and the electrode assembly 22, so as to reduce the risk of short circuit of positive and negative electrodes. The insulator 24 is made of an insulating material, and the insulator 24 may be made of an insulating material such as plastic and rubber.

In combination with FIG. 3 and FIG. 4, FIG. 4 is a schematic structural diagram of the end cap assembly shown in FIG. 3, and an embodiment of the present application provides a battery cell 20, the battery cell 20 including a housing 21, an electrode assembly 22, an end cap 23, an insulator 24 and a thermally conductive member 25. The housing 21 is provided with an opening. The electrode assembly 22 is configured to be accommodated in the housing 21. The end cap 23 is configured to cover the opening. The insulator 24 is located on the side of the end cap 23 facing the electrode assembly 22, and the insulator 24 is configured to isolate the end cap 23 from the electrode assembly 22. The thermally conductive member 25 is embedded in the insulator 24, and the thermally conductive member 25 is configured to be attached to the end cap 23.

One or more thermally conductive members 25 may be embedded in the insulator 24. The thermally conductive member 25 may be made of various materials, such as metal, ceramics, quartz, marble, thermally conductive adhesive.

The thermally conductive member 25 has a good thermally conductive performance, and the thermal conductivity of the thermally conductive member 25 is greater than that of the insulator 24, that is, the thermally conductive capability of the thermally conductive member 25 is superior to that of the insulator 24, so as to improve the situation that heat inside the battery cell 20 cannot be dissipated in time due to the poor thermally conductive capability of the insulator 24. For example, the thermally conductive member 25 is made of aluminum, the insulator 24 is made of rubber, and the thermal conductivity of aluminum is obviously greater than that of rubber.

The expression "the thermally conductive member 25 is embedded in the insulator 24" means that the thermally conductive member 25 is at least partially located in the insulator 24, and it is possible that the thermally conductive member 25 is partially located in the insulator 24, or the thermally conductive member 25 is completely located in the insulator 24. The thermally conductive member 25 is embedded in the insulator 24, so that the thermally conductive member 25 is closer to the electrode assembly 22, facilitating heat dissipation in the battery cell 20.

The expression "the thermally conductive member 25 is configured to be attached to the end cap 23" means that the thermally conductive member 25 is in direct contact with the end cap 23, so that the heat absorbed by the thermally conductive member 25 can be more efficiently transferred to the end cap 23. The thermally conductive member 25 may always be in contact with the end cap 23, or the thermally conductive member 25 may only be in contact with the end cap 23 in a certain scenario. For example, where the battery cell 20 is upright (the opening of the housing 21 facing upwards, and the end cap 23 being located at the top of the housing 21), there may be a gap between the insulator 24 and the end cap 23 under the action of gravity, so that there is a small gap between the thermally conductive member 25 and the end cap 23, and the thermally conductive member 25 is not in contact with the end cap 23; but where the battery cell 20 is inverted (the opening of the housing 21 facing downwards, the end cap 23 being located at the bottom of the housing 21), the insulator 24 moves downwards under the action of its own gravity and the gravity of the electrode assembly 22 and the electrolyte, so that the thermally conductive member 25 is in contact with the end cap 23. Of course, it is possible that whether the battery cell 20 is inverted or the battery cell 20 is upright, the thermally conductive member 25 is always in contact with the end cap 23.

In this embodiment, by embedding the thermally conductive member 25 in the insulator 24, and attaching the thermally conductive member 25 to the end cap 23, the heat generated by the electrode assembly 22 may be efficiently transferred to the end cap 23 through the thermally conductive member 25, and the arrangement of the thermally conductive member 25 improves the heat transfer efficiency between the electrode assembly 22 and the end cap 23, so that the heat generated by the electrode assembly 22 may be more easily transferred to the end cap 23 through the thermally conductive member 25, thereby effectively improving the heat dissipation performance of the battery cell 20 and prolonging the service life of the battery cell 20.

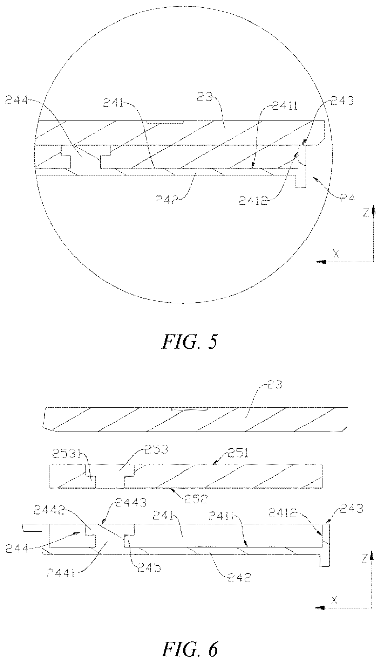

In some embodiments, referring to FIG. 5, FIG. 5 is a partial enlarged view of part A in the end cap assembly shown in FIG. 4, where the insulator 24 is provided with an accommodating groove 241 with a groove opening facing the end cap 23, and the thermally conductive member 25 is at least partially accommodated in the accommodating groove 241. The thermally conductive member 25 includes a first attachment surface 251 and a second attachment surface 252 which are arranged opposite each other in a thickness direction Z of the end cap 23, where the first attachment surface 251 is configured to be attached to the end cap 23, and the second attachment surface 252 is configured to be attached to a bottom face 2411 of the accommodating groove 241.

The thermally conductive member 25 is at least partially accommodated in the accommodating groove 241, and it is possible that the thermally conductive member 25 is completely accommodated in the accommodating groove 241, or the thermally conductive member 25 is partially located in the accommodating groove 241. If the thermally conductive member 25 is completely located in the accommodating groove 241, the thermally conductive member 25 is located inside the accommodating groove 241 for the first attachment surface 251 attached to the end cap 23, and in this case, the end cap 23 may partially extend into the accommodating groove 241, so as to be attached to the first attachment surface 251 of the thermally conductive member 25; and if the thermally conductive member 25 is partially located in the accommodating groove 241, the thermally conductive member 25 is located outside the accommodating groove 241 for the first attachment surface 251 attached to the end cap 23.

The groove opening of the accommodating groove 241 faces the end cap 23, so that the accommodating groove 241 has a bottom face 2411 and a groove side face 2412, where the groove side face 2412 is arranged around the edge of the bottom face 2411, and in the thickness direction Z of the end cap 23, the groove opening is located at a top end of the groove side face 2412, and the bottom face 2411 is located at a bottom end of the groove side face 2412. The thermally conductive member 25 is accommodated in the accommodating groove 241, and the groove side face 2412 is located at a peripheral side of the thermally conductive member 25. There may be a gap between a peripheral surface of the thermally conductive member 25 and the groove side face 2412 of the accommodating groove 241, or they may be in direct contact to form a fit. The peripheral surface of the thermally conductive member 25 is a surface of the thermally conductive member 25 apart from the first attachment surface 251 and the second attachment surface 252.

The shape of the accommodating groove 241 may match the shape of the thermally conductive member 25. For example, the thermally conductive member 25 is a rectangular block, and the accommodating groove 241 may be a rectangular groove matching the thermally conductive member 25. For another example, the thermally conductive member 25 is a round block, and the accommodating groove 241 may be a circular groove matching the thermally conductive member 25.

The first attachment surface 251 and the second attachment surface 252 both may be planar, and taking the thermally conductive member 25 as a block, the first attachment surface 251 and the second attachment surface 252 may be two end faces of the thermally conductive member 25 in the thickness direction Z of the end cap 23.

In this embodiment, the thermally conductive member 25 is at least partially accommodated in the accommodating groove 241 of the insulator 24, and the accommodating groove 241 has a limiting effect on the thermally conductive member 25, so that the thermally conductive member 25 is embedded in the insulator 24. The first attachment surface 251 of the thermally conductive member 25 is attached to the end cap 23, so that the thermally conductive member 25 is attached to the end cap 23. The second attachment surface 252 of the thermally conductive member 25 is attached to the bottom face 2411 of the accommodating groove 241. For one thing, the distance between the thermally conductive member 25 and the electrode assembly 22 may be shortened, a heat dissipation distance between the thermally conductive member 25 and the electrode assembly 22 is reduced, and the heat generated by the electrode assembly 22 may be more easily transferred to the thermally conductive member 25. For another, the contact area between the thermally conductive member 25 and the insulator 24 may be increased, and the heat transfer efficiency between the insulator 24 and the thermally conductive member 25 is improved, so that the heat on the insulator 24 may be quickly transferred to the thermally conductive member 25, further improving the heat dissipation performance of the battery cell 20.

In some embodiments, still referring to FIG. 5, the insulator 24 includes an insulating portion 242 located at the bottom of the accommodating groove 241, and the insulating portion 242 is configured to separate the electrode assembly 22 (shown in FIG. 5) from the thermally conductive member 25. The depth of the accommodating groove 241 is greater than the thickness of the insulating portion 242.

The insulating portion 242 refers to a portion of the insulator 24 that is located at the bottom of the accommodating groove 241 and that separates the electrode assembly 22 from the thermally conductive member 25. In the thickness direction Z of the end cap 23, the thermally conductive member 25 is located on the side of the insulating portion 242 away from the electrode assembly 22, and the insulating portion 242 functions to separate the electrode assembly 22 from the thermally conductive member 25.

The depth of the accommodating groove 241 is the size of the accommodating groove 241 in the thickness direction Z of the end cap 23, and the depth of the insulating portion 242 is the size of the insulating portion 242 in the thickness direction Z of the end cap 23.

In this embodiment, the depth of the accommodating groove 241 is greater than the thickness of the insulating portion 242 separating the electrode assembly 22 from the thermally conductive member 25, the insulating portion 242 is relatively thin, and the heat generated by the electrode assembly 22 is more easily transferred to the thermally conductive member 25 through the insulating portion 242, so as to take away the heat inside the battery cell 20 in time.

In some embodiments, still referring to FIG. 5, the insulator 24 is provided with a third attachment surface 243 attached to the end cap 23, the accommodating groove 241 is recessed from the third attachment surface 243 to the direction away from the end cap 23, and the third attachment surface 243 is flush with the first attachment surface 251.

The third attachment surface 243 is flush with the first attachment surface 251, that is, the third attachment surface 243 is coplanar with the first attachment surface 251. Since the accommodating groove 241 is recessed from the third attachment surface 243 to the direction away from the end cap 23, and the first attachment surface 251 of the thermally conductive member 25 is flush with the third attachment surface 243 of the insulator 24, no part of the thermally conductive member 25 is located outside the accommodating groove 241, which is the case where the thermally conductive member 25 is completely accommodated in the accommodating groove 241.

In this embodiment, since the third attachment surface 243 of the insulator 24 is flush with the first attachment surface 251 of the thermally conductive member 25, so that the first attachment surface 251 and the third attachment surface 243 both can be attached to the end cap 23, which is convenient for the heat transfer from the thermally conductive member 25 and the insulator 24 to the end cap 23 and for heat dissipation inside the battery cell 20.

In addition, since the third attachment surface 243 of the insulator 24 is attached to the end cap 23, so that the insulator 24 and the end cap 23 are more compact in structure, which allows more space for the electrode assembly 22 and facilitates improving the energy density of the battery cell 20.

In some embodiments, still referring to FIG. 5, the insulator 24 is provided with a limiting member 244, and the limiting member 244 is configured to limit the thermally conductive member 25 from the insulator 24.

The limiting member 244 is a component limiting the thermally conductive member 25 from the insulator 24, and the limiting member 244 may have various structures, as long as the thermally conductive member 25 is limited from the insulator 24. In an embodiment in which the thermally conductive member 25 is at least partially accommodated in the accommodating groove 241, the limiting member 244 limits the thermally conductive member 25 from the insulator 24, and it can be understood as the limiting member 244 limiting the thermally conductive member 25 from the accommodating groove 241. The thermally conductive member 25 may be provided on the bottom face 2411 of the accommodating groove 241, or may be provided on the groove side face 2412 of the accommodating groove 241. The limiting member 244 and the insulator 24 may be of an integrally formed structure or a split type structure.

One or more limiting members 244 limiting the thermally conductive member 25 from the insulator 24 may be provided.

In this embodiment, the limiting member 244 on the insulator 24 has a limiting effect on the thermally conductive member 25, so as to limit the thermally conductive member 25 from the insulator 24, thereby ensuring that the thermally conductive member 25 is always in contact with the insulator 24, and facilitating heat transfer from the insulator 24 to the thermally conductive member 25. In addition, in the process of assembling the battery cell 20, the thermally conductive member 25 is not separated from the insulator 24, facilitating the assembly of the battery cell 20.

In other embodiments, there may be other methods to limit the thermally conductive member 25 from the insulator 24, for example, the thermally conductive member 25 is bonded to the insulator 24.

In some embodiments, still referring to FIG. 5, the insulator 24 is provided with the accommodating groove 241 with the groove opening facing the end cap 23, and in an embodiment in which the thermally conductive member 25 is at least partially accommodated in the accommodating groove 241, the limiting member 244 may be configured to limit the thermally conductive member 25 from the bottom face 2411 of the accommodating groove 241.

The limiting member 244 is a component limiting the thermally conductive member 25 from the bottom face 2411 of the accommodating groove 241, and under the restriction of the limiting member 244, the thermally conductive member 25 does not shake up and down in the accommodating groove 241, ensuring the stability of the thermally conductive member 25 in the accommodating groove 241.

The limiting member 244 functions to limit the thermally conductive member 25 from the bottom face 2411 of the accommodating groove 241, so that the thermally conductive member 25 is always in contact with the bottom face 2411 of the accommodating groove 241, thereby increasing the heat transfer efficiency between the insulator 24 and the thermally conductive member 25, and enabling the heat on the insulator 24 to be quickly transferred to the thermally conductive member 25.

In some embodiments, referring to FIG. 6, FIG. 6 is a partial exploded view of the end cap assembly shown in FIG. 4; in the thickness direction Z of the end cap 23, a limiting gap 245 is formed between at least part of the limiting member 244 and the bottom face 2411 of the accommodating groove 241, and the limiting gap 245 is configured to accommodate part of the thermally conductive member 25, so as to limit the separation of the thermally conductive member 25 from the bottom face 2411 of the accommodating groove 241.

In the thickness direction Z of the end cap 23, the limiting gap 245 is formed between at least part of the limiting member 244 and the bottom face 2411 of the accommodating groove 241. It is possible that the limiting gap 245 is formed between the whole limiting member 244 and the bottom face 2411 of the accommodating groove 241, for example, the limiting member 244 is of an annular structure protruding from the groove side face 2412 of the accommodating groove 241, and there is a distance between the whole limiting member 244 and the bottom face 2411 of the accommodating groove 241 so as to form the limiting gap 245. It is also possible that the limiting gap 245 is formed between part of the limiting member 244 and the accommodating groove 241 and the bottom face 2411 of the accommodating groove 241, for example, the limiting member 244 protrudes from the bottom face 2411 of the accommodating groove 241, and there is a distance between part of the limiting member 244 and the bottom face 2411 of the accommodating groove 241 so as to form the limiting gap 245.

At least part of the thermally conductive member 25 is accommodated in the limiting gap 245 formed between the limiting member 244 and the bottom face 2411 of the accommodating groove 241, so as to limit the thermally conductive member 25 in the thickness direction Z of the end cap 23, thereby achieving the purpose of limiting the thermally conductive member 25 from the bottom face 2411 of the accommodating groove 241, and realizing a simple limiting structure.

In some embodiments, still referring to FIG. 6, the thermally conductive member 25 is provided with a through hole 253, the through hole 253 is configured to accommodate the limiting member 244, and a limiting protrusion 2531 is formed on a hole wall of the through hole 253. The limiting member 244 includes a connecting portion 2441 and a limiting portion 2442 connected to each other, where the connecting portion 2441 is connected to the bottom face 2411 of the accommodating groove 241, the limiting gap 245 is formed between the limiting portion 2442 and the bottom face 2411 of the accommodating groove 241, and the limiting gap 245 is configured to accommodate the limiting protrusion 2531.

The limiting member 244 and the insulator 24 may be of an integrally formed structure, and the material of the limiting member 244 and the insulator 24 may be the same, for example, the material of the limiting member 244 and the insulator 24 is rubber or plastic.

The limiting portion 2442 of the limiting member 244 may be an elastic component with a certain elastic deformation capability, in the process of the limiting member 244 penetrating through the through hole 253 in the thermally conductive member 25, the limiting portion 2442 is elastically deformed under the extrusion action of the limiting protrusion 2531, so that the limiting portion 2442 passes over the limiting protrusion 2531, thus the limiting protrusion 2531 is clamped in the limiting gap 245 between the limiting portion 2442 and the bottom face 2411 of the accommodating groove 241. The connecting portion 2441 of the limiting member 244 may be of a cylindrical structure, the limiting portion 2442 may be of an annular structure arranged around a circumferential surface of the connecting portion 2441, and the limiting protrusion 2531 may also be of an annular structure arranged around the hole wall of the through hole 253.

One or more limiting members 244 may be provided on the bottom face 2411 of the accommodating groove 241, and the through hole 253 in the thermally conductive member 25 corresponds to the limiting member 244. In order to improve the stability of the thermally conductive member 25 in the accommodating groove 241, a plurality of non-collinear limiting members 244 may be provided, and the plurality of limiting members 244 jointly limit the thermally conductive member 25. Illustratively, three non-collinear limiting members 244 are provided on the bottom face 2411 of the accommodating groove 241.

In this embodiment, the limiting protrusion 2531 on the hole wall of the through hole 253 of the thermally conductive member 25 is accommodated in the limiting gap 245 formed between the limiting portion 2442 and the bottom face 2411 of the accommodating groove 241, and the insulator 24 is snap-fitted to the thermally conductive member 25 through the limiting member 244, facilitating the disassembly and assembly of the thermally conductive member 25 and the insulator 24.

In some embodiments, still referring to FIG. 6, the limiting member 244 protrudes from the bottom face 2411 of the accommodating groove 241, a fourth attachment surface 2443 is formed at the end of the limiting member 244 away from the bottom face 2411 of the accommodating groove 241, and the fourth attachment surface 2443 is configured to be attached to the end cap 23.

The fourth attachment surface 2443 is configured to be attached to the end cap 23, so that the limiting member 244 is in contact with the end cap 23. The fourth attachment surface 2443 may be an end face at the end of the limiting member 244 away from the bottom face 2411 of the accommodating groove 241.

In an embodiment in which the third attachment surface 243 of the insulator 24 is attached to the end cap 23, since the fourth attachment surface 2443 is attached to the end cap 23, the fourth attachment surface 2443 is flush with the third attachment surface 243, that is, the fourth attachment surface 2443 is coplanar with the third attachment surface 243, so that the limiting member 244 is completely located inside the accommodating groove 241. Where the third attachment surface 243 of the insulator 24 is not attached to the end cap 23, since the fourth attachment surface 2443 is attached to the end cap 23, the limiting member 244 is partially located outside the accommodating groove 241.

In this embodiment, the fourth attachment surface 2443 of the limiting member 244 is attached to the end cap 23, facilitating heat transfer from the insulator 24 to the end cap 23.

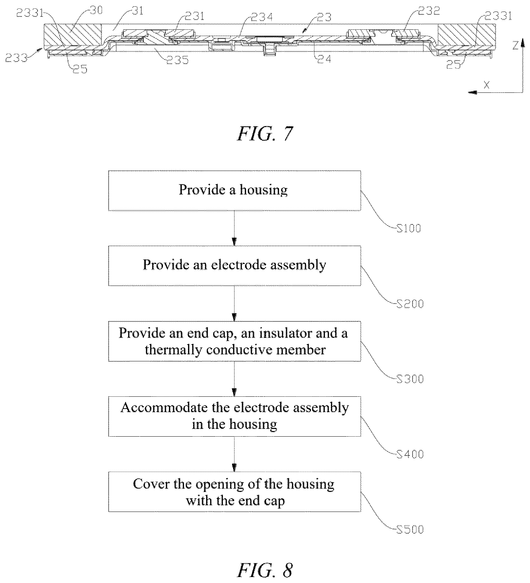

In some embodiments, referring to FIG. 7, FIG. 7 is a position relationship diagram of the end cap assembly and the thermal management component 30, where the end cap 23 is configured to be attached to the thermal management component 30, and the thermal management component 30 is configured to manage the temperature of the battery cell 20.

The end cap 23 is configured to be attached to the thermal management component 30, it is possible that the end cap 23 and the thermal management component 30 are only in contact with each other, but are not connected or fixed, and the end cap 23 is fixedly connected to the thermal management component 30, for example, the end cap 23 is fixedly connected to the thermal management component 30 through a thermally conductive adhesive.

The thermal management component 30 is a component for managing the temperature of the battery cell 20, and the thermal management component 30 may heat the battery cell 20 or cool the battery cell 20. If the thermal management component 30 heats the battery cell 20, the heat from the thermal management component 30 may be transferred to the thermally conductive member 25 through the end cap 23, and the thermally conductive member 25 releases heat to heat the interior of the battery 100; and if the thermal management component 30 cools the battery cell 20, the heat inside the battery cell 20 may be transferred to the end cap 23 through the thermally conductive member 25, and the thermal management component 30 takes away the heat on the end cap 23 so as to cool the battery cell 20.

In this embodiment, the end cap 23 is configured to be attached to the thermal management component 30, and the battery cell 20 may transfer heat to the thermal management component 30 through the end cap 23, so as to adjust the temperature of the battery cell 20 through the thermal management component 30. Since the insulator 24 is internally embedded with the thermally conductive member 25, which can effectively improve the thermal management efficiency of the thermal management component 30 to the battery cell 20, so that the battery cell 20 is in a reasonable operating temperature.

In some embodiments, still referring to FIG. 7, the end cap 23 is provided with an attachment portion 2331 attached to the thermal management component 30, and the thermally conductive member 25 is configured to be attached to the attachment portion 2331.

The attachment portion 2331 is a portion of the end cap 23 that is attached to the thermal management component 30 and the thermally conductive member 25, and the attachment portion 2331 may be of a plate-shaped structure between the end cap 23 and the thermal management component 30.

The end cap 23 may have various structures. Illustratively, the end cap 23 includes a main portion 233 and a bump 234, where the main portion 233 is configured to cover the opening of the housing 21 (not shown in FIG. 7), the bump 234 protrudes from an outer surface of the main portion 233, a recess 235 is formed at a position on an inner surface of the main portion 233 corresponding to the bump 234, and the recess 235 is configured to accommodate at least part of the tab of the electrode assembly 22 (not shown in FIG. 7), so as to make more space for the electrode assembly 22 and facilitate improving the energy density of the battery cell 20. The attachment portions 2331 may be portions of the main portion 233 that are located on two sides of the bump 234 in a length direction X of the end cap 23. That is to say, two attachment portions 2331 are provided in the end cap 23, and in the length direction X of the end cap 23, the two attachment portions 2331 are respectively located on two sides of the bump 234. Of course, two thermally conductive members 25 embedded in the insulator 24 may be provided, one thermally conductive member 25 being correspondingly attached to one attachment portion 2331.

In the battery cell 20, the electrode terminal may be mounted to the bump 234 of the end cap 23, for example, the positive electrode terminal 231 and the negative electrode terminal 232 are both mounted to the bump 234, and the positive electrode terminal 231 and the negative electrode terminal 232 are spaced apart in the length direction X of the end cap 23.

The thermal management component 30 may be provided with an avoidance hole 31 for avoidance of the bump 234.

In this embodiment, the attachment portion 2331 of the end cap 23 is configured to be attached to the thermal management component 30 and the thermally conductive member 25, which can shorten a heat transfer path between the thermal management component 30 and the thermally conductive member 25, and improves the heat impact efficiency of the thermal management component 30 to the battery cell 20.

In some embodiments, still referring to FIG. 7, in the thickness direction Z of the end cap 23, a projection of the thermal management component 30 at least partially overlaps with that of the thermally conductive member 25.

In an embodiment in which the attachment portion 2331 of the end cap 23 is attached to the thermal management component 30 and the end cap 23 is attached to the thermally conductive member 25, in the thickness direction Z of the end cap 23, the attachment portion 2331 may be located between the thermal management component 30 and the thermally conductive member 25. The thermal management component 30, the attachment portion 2331 and the thermally conductive member 25 are arranged in a stacked manner in the thickness direction Z of the end cap 23. The thermal management component 30 is attached to an outer surface of the attachment portion 2331, and the thermally conductive member 25 is attached to an inner surface of the attachment portion 2331.

In this embodiment, the projection of the thermal management component 30 in the thickness direction Z of the end cap 23 at least partially overlaps with that of the thermally conductive member 25 in the thickness direction Z of the end cap 23, which can effectively shorten the heat transfer path between the thermal management component 30 and the thermally conductive member 25, and improves the heat impact efficiency of the thermal management component 30 to the battery cell 20.

In some embodiments, the thermally conductive member 25 is made of metal.

The thermally conductive member 25 may be made of one or more of materials such as copper, iron, aluminum, steel, and aluminum alloy. If the thermally conductive member 25 is made of various materials, the thermally conductive member 25 may be divided into a plurality of portions connected together, and the plurality of portions may be made of different materials. For example, the thermally conductive member 25 includes two portions connected together, one portion being made of iron, and the other portion being made of aluminum. Illustratively, the thermally conductive member 25 is a metal block embedded into the insulator 24, such as an aluminum block.

In this embodiment, the thermally conductive member 25 is made of metal, and the thermally conductive member 25 has good thermally conductive capability.

An embodiment of the present application provides a battery 100, including a case 10 and the battery cell 20 provided in any one of the above embodiments, the case 10 being configured to accommodate the battery cell 20.

In some embodiments, the battery 100 further includes the thermal management component 30, where the thermal management component 30 is configured to be attached to the end cap 23, and the thermal management component 30 is configured to manage the temperature of the battery cell 20.

An embodiment of the present application provides a power consuming apparatus, including the battery 100 provided in any one of the above embodiments.

The power consuming apparatus may be any preceding apparatus using the battery 100.

Referring to FIG. 3 and FIG. 4, an embodiment of the present application further provides a square case battery 100, including a housing 21, an electrode assembly 22, an end cap 23, an insulator 24 and a thermally conductive member 25. The electrode assembly 22 is accommodated in the housing 21. The end cap 23 includes a main portion 233 and a bump 234, where the main portion 233 covers an opening of the housing 21, the bump 234 protrudes from an outer surface of the main portion 233, a recess 235 is formed at a position on an inner surface of the main portion 233 corresponding to the bump 234, and the recess 235 is configured to accommodate at least part of a tab of the electrode assembly 22. The insulator 24 is located on the side of the end cap 23 facing the electrode assembly 22, and the insulator 24 is configured to isolate the end cap 23 from the electrode assembly 22. The thermally conductive member 25 is embedded in the insulator 24, and the thermally conductive member 25 is attached to the main portion 233 of the end cap 23. The heat generated by the electrode assembly 22 may be efficiently transferred to the main portion 233 of the end cap 23 through the thermally conductive member 25, and the arrangement of the thermally conductive member 25 improves the heat transfer efficiency between the electrode assembly 22 and the end cap 23, so that the heat generated by the electrode assembly 22 may be more easily transferred to the main portion 233 of the end cap 23 through the thermally conductive member 25, thereby effectively improving the heat dissipation performance of the battery cell 20 and prolonging the service life of the battery cell 20.

An embodiment of the present application provides a method for manufacturing the battery cell 20. Referring to FIG. 8, FIG. 8 is a flow chart of a method for manufacturing the battery cell 20 according to some embodiments of the present application, the method including:
S100: providing a housing 21, the housing 21 being provided with an opening;
S200: providing an electrode assembly 22;
S300: providing an end cap 23, an insulator 24 and a thermally conductive member 25, where the insulator 24 is located on one side of the end cap 23, the thermally conductive member 25 is embedded in the insulator 24, and the thermally conductive member 25 is configured to be attached to the end cap 23;
S400: accommodating the electrode assembly 22 in the housing 21;
S500: covering an opening of the housing 21 with the end cap 23, such that the insulator 24 is located on the side of the end cap 23 facing the electrode assembly 22.

In the method, the sequence of step S100, step S200, and step S300 is not limited. For example, step S300 may be performed first, then step S200 is performed, and then step S100 is performed.

It should be noted that a related structure of the battery cell 20 manufactured through the method provided by the above embodiments can refer to the battery cell 20 provided by the foregoing embodiments, and details are not repeated herein.

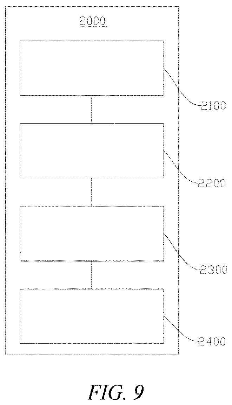

In addition, an embodiment of the present application further provides an apparatus 2000 for manufacturing the battery cell 20. Referring to FIG. 9, FIG. 9 is a schematic block diagram of the apparatus 2000 for manufacturing the battery cell 20 provided by some embodiments of the present application, the manufacturing apparatus 2000 including a first provision device 2100, a second provision device 2200, a third provision device 2300, and an assembly device 2400.

The first provision device 2100 is configured to provide a housing 21, the housing 21 being provided with an opening. The second provision device 2200 is configured to provide an electrode assembly 22. The third provision device 2300 is configured to provide an end cap 23, an insulator 24 and a thermally conductive member 25, where the insulator 24 is located on one side of the end cap 23, the thermally conductive member 25 is embedded in the insulator 24, and the thermally conductive member 25 is configured to be attached to the end cap 23. The assembly device 2400 is configured to accommodate the electrode assembly 22 in the housing 21; and the assembly device 2400 is also configured to cover the opening with the end cap 23, such that the insulator 24 is located on the side of the end cap 23 facing the electrode assembly 22.

It should be noted that a related structure of the battery cell 20 manufactured through the manufacturing apparatus 2000 provided by the above embodiments can refer to the battery cell 20 provided by the foregoing embodiments, and details are not repeated herein.

It should be noted that the embodiments in the present application and features in the embodiments may be combined with each other without conflicts.

The above embodiments are only used to explain the technical solutions of the present application, and are not intended to limit the present application, and various modifications and changes of the present application may be made by those skilled in the art. Any modifications, equivalent substitutions, improvements, and the like made within the spirit and principle of the present application should be included within the scope of protection of the present application.

## Claims

1. A battery cell, **characterized by** comprising:
a housing provided with an opening;
an electrode assembly configured to be accommodated in the housing;
an end cap configured to cover the opening;
an insulator located on the side of the end cap facing the electrode assembly, the insulator being configured to isolate the end cap from the electrode assembly; and
a thermally conductive member embedded in the insulator, the thermally conductive member being configured to be attached to the end cap.

2. The battery cell according to claim 1, **characterized in that** the insulator is provided with an accommodating groove with a groove opening facing the end cap, and the thermally conductive member is at least partially accommodated in the accommodating groove; and
the thermally conductive member comprises a first attachment surface and a second attachment surface which are arranged opposite each other in a thickness direction of the end cap, wherein the first attachment surface is configured to be attached to the end cap, and the second attachment surface is configured to be attached to a bottom face of the accommodating groove.

3. The battery cell according to claim 2, **characterized in that** the insulator comprises an insulating portion located at the bottom of the accommodating groove, and the insulating portion is configured to separate the electrode assembly from the thermally conductive member; and
the depth of the accommodating groove is greater than the thickness of the insulating portion.

4. The battery cell according to claim 2 or 3, **characterized in that** the insulator is provided with a third attachment surface attached to the end cap, the accommodating groove is recessed from the third attachment surface to the direction away from the end cap, and the third attachment surface is flush with the first attachment surface.

5. The battery cell according to claim 1, **characterized in that** the insulator is provided with a limiting member, and the limiting member is configured to limit the thermally conductive member from the insulator.

6. The battery cell according to claim 5, **characterized in that** the insulator is provided with an accommodating groove with a groove opening facing the end cap, and the thermally conductive member is at least partially accommodated in the accommodating groove; and
the limiting member is configured to limit the thermally conductive member from a bottom face of the accommodating groove.

7. The battery cell according to claim 6, **characterized in that** in a thickness direction of the end cap, a limiting gap is formed between at least part of the limiting member and the bottom face, and the limiting gap is configured to accommodate part of the thermally conductive member, so as to limit the thermally conductive member from the bottom face.

8. The battery cell according to claim 7, **characterized in that** the thermally conductive member is provided with a through hole, the through hole is configured to accommodate the limiting member, and a limiting protrusion is formed on a hole wall of the through hole; and
the limiting member comprises a connecting portion and a limiting portion connected to each other, wherein the connecting portion is connected to the bottom face, the limiting gap is formed between the limiting portion and the bottom face, and the limiting gap is configured to accommodate the limiting protrusion.

9. The battery cell according to any one of claims 6-8, **characterized in that** the limiting member protrudes from the bottom face, a fourth attachment surface is formed at the end of the limiting member away from the bottom face, and the fourth attachment surface is configured to be attached to the end cap.

10. The battery cell according to any one of claims 1-9, **characterized in that** the end cap is configured to be attached to a thermal management component, and the thermal management component is configured to manage the temperature of the battery cell.

11. The battery cell according to claim 10, **characterized in that** the end cap is provided with an attachment portion attached to the thermal management component, and the thermally conductive member is configured to be attached to the attachment portion.

12. The battery cell according to claim 10 or 11, **characterized in that** in a thickness direction of the end cap, a projection of the thermal management component at least partially overlaps with that of the thermally conductive member.

13. The battery cell according to any one of claims 1-12, **characterized in that** the thermally conductive member is made of metal.

14. A battery, **characterized by** comprising:
the battery cell according to any one of claims 1-13; and
a case configured to accommodate the battery cell.

15. The battery according to claim 14, **characterized in that** the battery further comprises a thermal management component, the thermal management component is configured to be attached to the end cap, and the thermal management component is configured to manage the temperature of the battery cell.

16. A power consuming apparatus, **characterized by** comprising the battery according to claim 14 or 15.

17. A method for manufacturing a battery cell, **characterized in that** the method comprises:
providing a housing provided with an opening;
providing an electrode assembly;
providing an end cap, an insulator and a thermally conductive member, wherein the insulator is located on one side of the end cap, the thermally conductive member is embedded in the insulator, and the thermally conductive member is configured to be attached to the end cap;
accommodating the electrode assembly in the housing; and
covering the opening with the end cap, such that the insulator is located on the side of the end cap facing the electrode assembly.

18. An apparatus for manufacturing a battery cell, **characterized by** comprising:
a first provision device configured to provide a housing provided with an opening;
a second provision device configured to provide an electrode assembly;
a third provision device configured to provide an end cap, an insulator and a thermally conductive member, wherein the insulator is located on one side of the end cap, the thermally conductive member is embedded in the insulator, and the thermally conductive member is configured to be attached to the end cap; and
an assembly device configured to accommodate the electrode assembly in the housing, and the assembly device being further configured to cover the opening with the end cap, such that the insulator is located on the side of the end cap facing the electrode assembly.
